# EUROPEAN PATENT APPLICATION

(11) **EP 3 667 460 A1**
(43) Date of publication of application: **17.06.2020**
(21) Application number: 18306693.5
(22) Date of filing: 14.12.2018
(51) Int. Cl.: G06F 3/01

(54) **METHODS AND APPARATUS FOR USER -DEVICE INTERACTION**

(71) Applicant: InterDigital CE Patent Holdings, 75017 Paris (FR)
(72) Inventor: LELIEVRE, SYLVAIN, 35576 CESSON SEVIGNE CEDEX (FR); MOCQUARD, OLIVIER, 35576 CESSON SEVIGNE CEDEX (FR); MARVIE, JEAN-EUDES, 35576 CESSON SEVIGNE CEDEX (FR)
(74) Representative: Huchet, Anne

(57) **Abstract**

A method comprising and a device configured for detecting a movement of at least one hand between a first position and a second position; and selecting a control mode according to whether a distance between the second position and a position of another part of a human body is greater than a first determined distance value and according to whether the at least one hand stays at a distance greater than a second determined distance value from the another part of a human body during a time greater than a determined time value.

## Description

### 1. Technical field

The present document relates to the domain of natural user-device interaction. The present document is also understood in the context of user interface providing an interaction between one or more users and a virtual reality (VR) environment and/or an augmented-reality (AR environment.

### 2. Background

This section is intended to introduce the reader to various aspects of art, which may be related to various aspects that are described and/or claimed below. This discussion is believed to be helpful in providing the reader with background information to facilitate a better understanding of the present description. Accordingly, these statements are to be read in this light, and not as admissions of prior art.

VR and/or AR applications may implement user tracking systems to provide real immersive experiences. They use sensors (wearable or not), depth/color camera or any devices that can provide shape and position of one or more element of the user's body.

The interaction between a user and a VR and/or AR environment may be obtained via a gesture-controlled interface. With such an interface, one or more cameras may capture the gestures of the user and the obtained images may be analysed by image processing to interpret the gestures and perform an action associated with the gestures, for example by classifying the gestures according to a predefined vocabulary in order to infer the associated command.

However, such an interface may be difficult to apprehend, especially for users using it for the first times.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

According to one embodiment, a method comprising:
- detecting a movement of at least one hand between a first position and a second position;
- selecting a control mode according to whether a distance between the second position and a position of another part of a human body is greater than a first determined distance value and according to whether the at least one hand stays at a distance greater than a second determined distance value from the another part of a human body during a time greater than a determined time value.

According to another embodiment, a device comprising:
- a detector configured for detecting a movement of at least one hand between a first position and a second position;
- a selector configured for selecting a control mode according to whether a distance between the second position and a position of another part of a human body is greater than a first determined distance value and according to whether the at least one hand stays at a distance greater than a second determined distance value from the another part of a human body during a time greater than a determined time value.

According to a further embodiment, a computer program product comprises program code instructions to execute the steps of the method(s), when this program is executed on a computer.

According to another embodiment, a (e.g., non-transitory) processor readable medium has stored therein instructions for causing a processor to perform the steps of the method(s).

### 4. List of figures

The present specification will be better understood, and other specific features and advantages will emerge upon reading the following description, the description making reference to the annexed drawings wherein:
- Figure 1 shows a system for interaction between a user and a 3D scene, according to a non-restrictive embodiment;
- Figure 2 shows a process for interaction between a user and an environment, according to a non-restrictive embodiment;
- Figures 3A and 3B each shows an area associated with the user to figure 1, the area being used in the process of figure 2, according to a non-restrictive embodiment;
- Figure 4 shows the area of Figures 3A and 3B, according to a further non-restrictive embodiment;
- Figure 5 shows an example architecture of a device which may be configured to implement a method or process described in relation with figures 2, 6 and 7, according to a non-restrictive embodiment;
- Figure 6 shows an example of a process for interaction between a user and an environment, according to a non-restrictive embodiment;
- Figure 7 shows a method for controlling an object with at least a hand, according to a non-restrictive embodiment.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to non-restrictive embodiments, methods and devices to control one or more objects of a VR or AR environment are disclosed. It will be appreciated that those skilled in the art will be able to devise various arrangements from the embodiments described hereinbelow.

One or more embodiments of a method for (and an apparatus configured for) controlling an object, e.g. a virtual object or a graphical representation of a real object, with movements completed by one or two hands are described. A movement of at least one hand is detected between a first position and a second position. A control mode, e.g. a first control mode called continuous mode or a second control mode called discrete mode, may be selected according to whether a distance between the second position and a position of another part of a human body is greater than a first determined distance value and according to whether the at least one hand stays at a distance greater than a second determined distance value from the another part of a human body during a time greater than a determined time value.

For example, the first control mode is selected when the distance between the second position and the position of the another part of a human body is greater than the first determined distance value and the time is greater than the determined time value.

According to another example, the second control mode is selected when the distance between the second position and the position of the another part of a human body is greater than the first determined distance value, the time is less than the determined time value and a motion of the at least one hand is detected with an amplitude greater than a determined amplitude value. At the end of the motion, the distance between the at least one hand and the position of the another part of a human body is less than a second determined distance value.

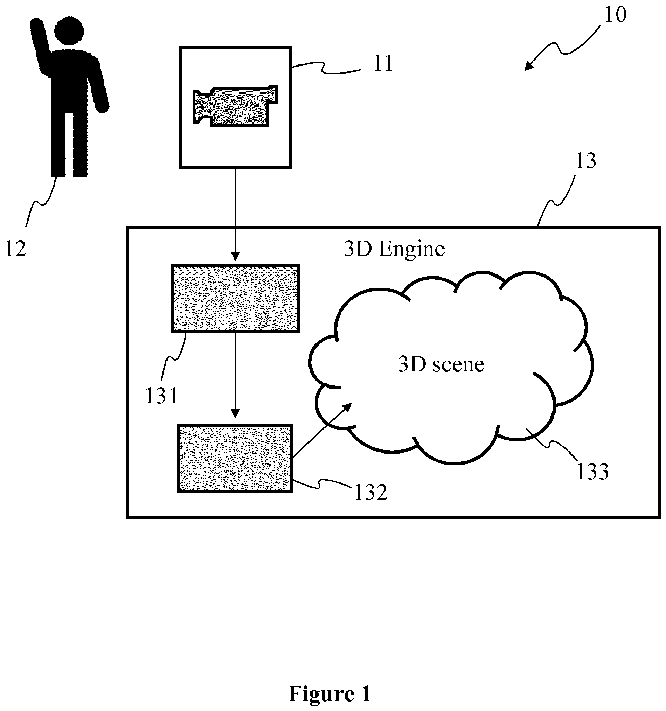

**Figure 1** shows an example of a system 10 for interaction between a user and a 3D scene.

Images of a user 12 may be acquired with an image acquisition device 11 such as a camera, a depth sensor or a camera associated with a depth sensor. A 3D engine 13 tracks 131 one or more key points of the user from the acquired images, for example the hands, the shoulders and/or the torso of the user. Gestures of the hands are determined 132 and processed to manipulate one or more objects of a 3D scene 133. A 3D object of the 3D scene may for example be rotated, zoomed, translated according to the gestures that have been determined. For example, a rotation of the 3D object may be performed along the normal of a hand move vector, a zoom proportional to the distance between the two hands may be performed and/or a translation along the hand movement direction may be obtained.

According to a variant, the object to be manipulated may be a 2D object of a 2D scene.

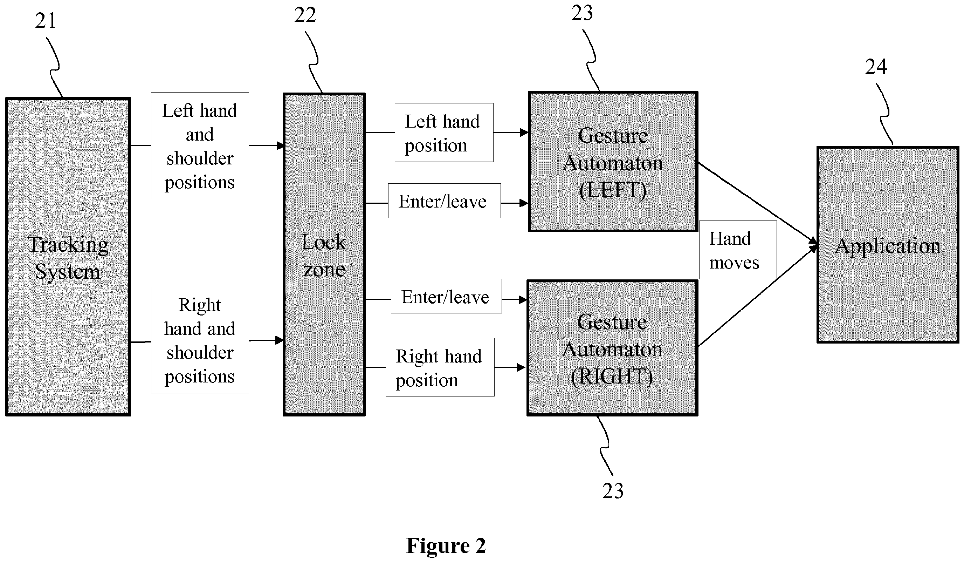

**Figure 2** shows an example of a process for interaction between a user and an environment.

In a first operation 21, 3D positions of the hands of a user are tracked with 3D positions of reference part(s) of the body of the user different from the hands, for example the shoulders. The positions of the different parts of the body of the user (e.g. hands and shoulders) may be tracked with any system known from the skilled person in the art, for example with a tracking system detecting the positions of sensors worn by the user or with user tracker library using depth and/or color images (e.g. Nite, MS Kinect SDK, Intel Realsense SDK).

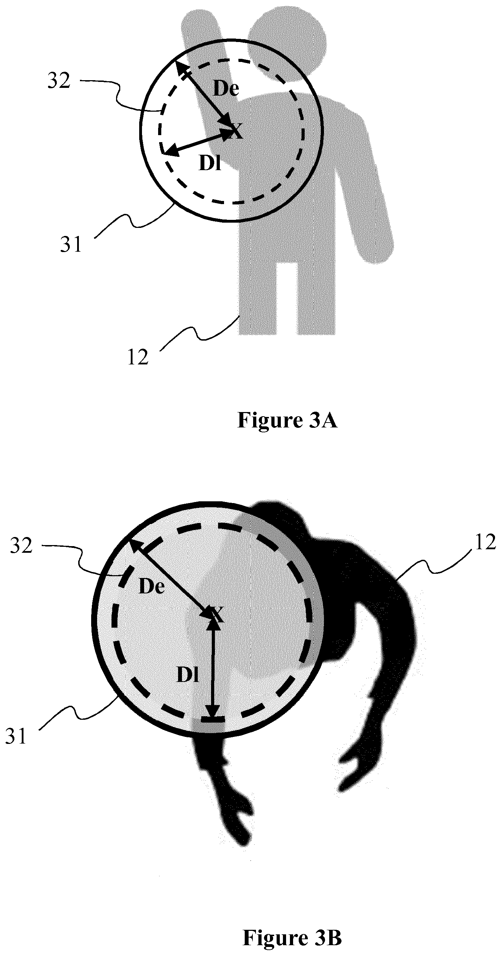

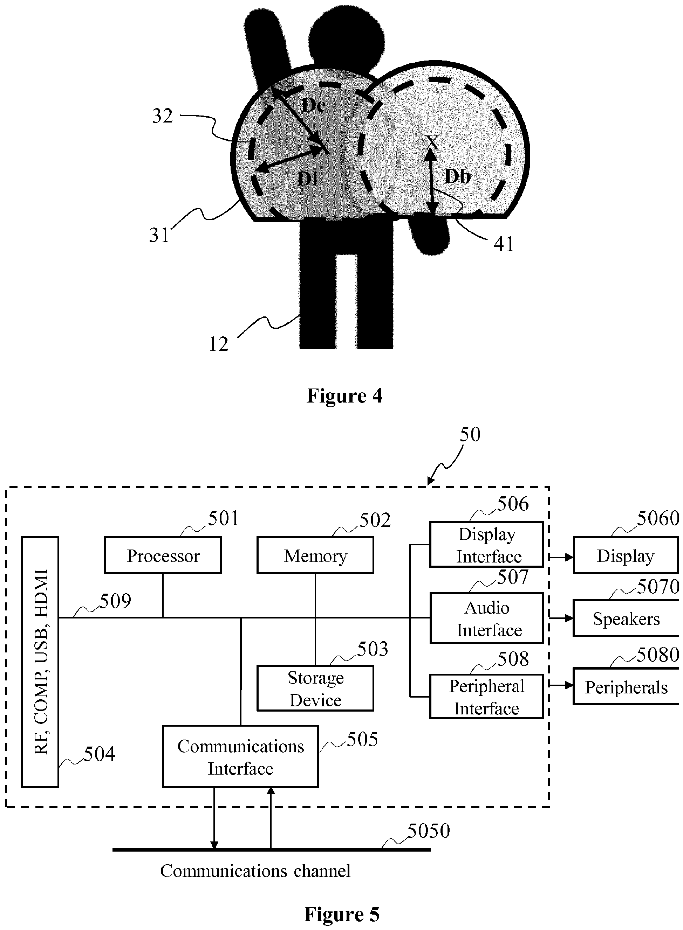

In a second operation 22, it is determined whether the right hand and/or the left hand enters a so-called "lock zone". **Figures 3A**, **3B** **and** **4** each shows an illustration of such a lock zone.

For each hand, a distance to the corresponding reference part of the body of the user is determined, e.g. calculated. For example, for the right hand, the distance between the right hand and the right shoulder is calculated and/or for the left hand, the distance between the left hand and the left shoulder is calculated. According to another example, the reference part is the same for both hands and corresponds for example to the torso of the user 12.

A lock zone may be for example defined as follows:
- to enter the lock zone, the hand-shoulder distance should be greater than a determined distance value De and the hand has to be not lower than Db from the shoulder;
- to leave the lock zone, the hand-shoulder distance should be less than Dl or the hand should be lower than Db from the shoulder.

The determined distance values De, Db and Dl may be the same for each and every user. According to a variant, the determined distance values De, Db and Dl may vary from a user to another one, for example according to the user's size.

De might for example be equal to 35 cm, Dl to 25 cm and Db to 18 cm.

In a third operation 23, the hands and shoulders positions run an automaton (also called interaction system) for each hand, according to whether the hand enters / leaves the lock zone. The output of these automaton corresponds to hand movements (direction and/or amplitude of the movement) that might be used for controlling the object.

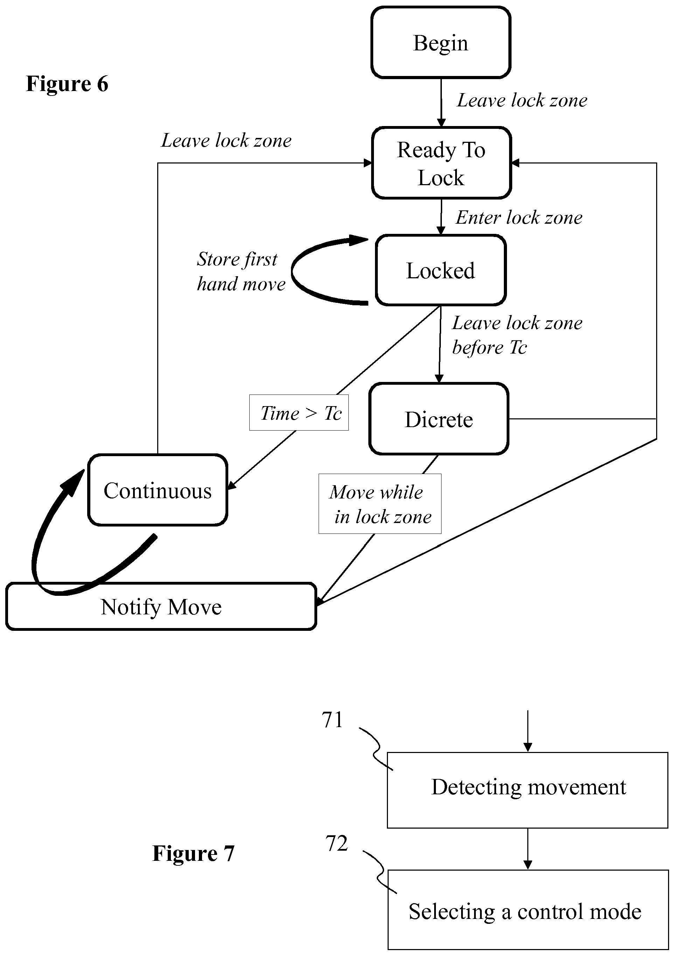

**Figure 6** shows an example of the process performed by the automaton, for example the automaton for the right hand.

A hand enters the BEGIN state when the interaction system is activated.

The hand enters the READY_TO_LOCK state when the hand is outside of the lock zone.

The hand enters the LOCKED state when the hand enters the lock zone:
a. the hand goes back in the READY_TO_LOCK state if the hand leaves the lock zone before the ***Tc*** timeout without any move.

Tc might for example be equal to 1 second.

The hand enters the CONTINUOUS state when it stays in the lock zone more than ***Tc.***
a. Notify a move at each frame: a direction and a length.
b. Move calculated from a hand reference position set when the hand enters this mode
c. The hand goes back in the READY_TO_LOCK state if the hand leaves the lock zone.

If both hands are in the CONTINUOUS state:
a. The move vector is the one between the two hands
b. Reference values are stored when entering CONTINUOUS state
   - the angle between the move vector and the X axis
   - the vector length
c. Each hands position in the CONTINUOUS mode triggers an event;
   - A hand vector (direction and length)

The hand enters the DISCRETE state when it leaves the lock zone after a significant move (> ***Dmin***) and before the ***Tc*** timeout
a. Notify one gesture: a move vector in a given direction
b. Move vector calculated from a hand reference position set when the hand enters the LOCKED state.
c. The hand goes back in the READY_TO_LOCK state

In a fourth operation 24, the outputs of the automaton obtained with the third operation 23 may be used to interact with a VR or AR scene. Different examples of applications are as follows:

### Discrete move mode

The move vector can be used as a rotation applied to an object:
- the normal to the move vector gives a rotation axis
- the rotation angle is a fixed value ***alpha*** (e.g. PI/4)

It can also define a translation toward the move direction, with a fixed step.

### Continuous mode (one hand)

The hand is locked to an object that move with it. The move vector may define a rotation:
- the normal to the move vector gives a rotation axis
- the length to the move vector is used to calculate the angle (e.g. angle =Beta*length)
- or the length gives the rotation speed (e.g. angle += length * angleStep).

If the hand comes back to the reference position, the rotation stops.

The hand is locked to a VR scene in which the user wants to navigate:
- The vector direction gives the user's direction: up=forward, down=backward, left=left and right=right.
- The vector length gives the speed of the user's move.

### Continuous mode (two hands)

The hands are locked to an object that move with them. The move vector may define a rotation:
- the angle between the move vector and the X axis (minus reference angle) give a rotation angle around the Z axis
- the vector length (divide by reference length) give a zoom value.
- the reference values (angle and length) are set when the two hands enter the continuous mode.
- A minimum hand distance may be defined under which no rotation is applied.

The hands are locked to a VR scene the user wants to explore:
- The vector length is used to calculate a zoom value
- The position of center of the move vector is used to browse the scene by modifying the user's point of view

Move vectors may be filtered to limit the moves in given directions. For instance, only horizontal or vertical direction. In continuous mode, a neutral zone may be specified so that a move less than a given length does not trigger any action.

Depending on the application, one of the two control modes may be deactivated. For instance, discrete mode may interfere with other usages of the user tracker.

**Figure 5** illustrates a block diagram of an example of a system in which various aspects and embodiments are implemented. System 50 can be embodied as a device including the various components described below and is configured to perform one or more of the aspects described in this application. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 50, singly or in combination, can be embodied in a single integrated circuit, multiple ICs, and/or discrete components. For example, in at least one embodiment, the processing and encoder/decoder elements of system 50 are distributed across multiple ICs and/or discrete components. In various embodiments, the system 50 is communicatively coupled to other similar systems, or to other electronic devices, via, for example, a communications bus or through dedicated input and/or output ports. In various embodiments, the system 50 is configured to implement one or more of the aspects described in this document.

The system 50 includes at least one processor 501 (CPU and/or GPUs) configured to execute instructions loaded therein for implementing, for example, the various aspects described in this document. Processor 501 can include embedded memory, input output interface, and various other circuitries as known in the art. The system 50 includes at least one memory 502 (e.g., a volatile memory device, and/or a non-volatile memory device). System 50 includes a storage device 503, which can include non-volatile memory and/or volatile memory, including, but not limited to, EEPROM, ROM, PROM, RAM, DRAM, SRAM, flash, magnetic disk drive, and/or optical disk drive. The storage device 503 can include an internal storage device, an attached storage device, and/or a network accessible storage device, as non-limiting examples.

Program code to be loaded onto processor 501 to perform the various aspects described in this document can be stored in storage device 503 and subsequently loaded onto memory 502 for execution by processor 501. In accordance with various embodiments, one or more of processor 501, memory 502, storage device 503 can store one or more of various items during the performance of the processes described in this document.

In several embodiments, memory inside of the processor 501 a is used to store instructions and to provide working memory for processing the data of the process described in this document.

In other embodiments, however, a memory external to the processing device (for example, the processing device can be either the processor 501) is used for one or more of these functions. The external memory can be the memory 502 and/or the storage device 503, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory.

The input to the elements (for example data acquired with a camera and/or depth sensor) of system 50 can be provided through various input devices as indicated in block 504. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In one set-top box embodiment, the RF portion and its associated input processing element receives an RF signal transmitted over a wired (for example, cable) medium, and performs frequency selection by filtering, downconverting, and filtering again to a desired frequency band.

Various embodiments rearrange the order of the above-described (and other) elements, remove some of these elements, and/or add other elements performing similar or different functions.

Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 50 to other electronic devices across USB and/or HDMI connections. It is to be understood that various aspects of input processing, for example, Reed-Solomon error correction, can be implemented, for example, within a separate input processing IC or within processor 501 as necessary. Similarly, aspects of USB or HDMI interface processing can be implemented within separate interface ICs or within processor 501 as necessary. The demodulated, error corrected, and demultiplexed stream is provided to various processing elements, including, for example, processor 501, operating in combination with the memory and storage elements to process the data stream as necessary for presentation on an output device.

Various elements of system 50 can be provided within an integrated housing. Within the integrated housing, the various elements can be interconnected and transmit data therebetween using suitable connection arrangement, for example, an internal bus as known in the art, including the I2C bus, wiring, and printed circuit boards.

The system 50 includes communication interface 505 that enables communication with other devices via communication channel 5050. The communication interface 505 can include, but is not limited to, a transceiver configured to transmit and to receive data over communication channel 5050. The communication interface 505 can include, but is not limited to, a modem or network card and the communication channel 5050 can be implemented, for example, within a wired and/or a wireless medium.

Data is streamed to the system 50, in various embodiments, using a Wi-Fi network such as IEEE 802.11. The Wi-Fi signal of these embodiments is received over the communications channel 5050 and the communications interface 505 which are adapted for Wi-Fi communications. The communications channel 5050 of these embodiments is typically connected to an access point or router that provides access to outside networks including the Internet for allowing streaming applications and other over-the-top communications.

The system 50 can provide an output signal to various output devices, including a display 5060, speakers 5070, and other peripheral devices 5080. The other peripheral devices 5080 include, in various examples of embodiments, one or more of a stand-alone DVR, a disk player, a stereo system, a lighting system, and other devices that provide a function based on the output of the system 50.

In various embodiments, control signals are communicated between the system 50 and the display 5060, speakers 5070, or other peripheral devices 5080 using signaling such as AV.Link, CEC, or other communications protocols that enable device-to-device control with or without user intervention.

The output devices can be communicatively coupled to system 50 via dedicated connections through respective interfaces 506, 507, and 508.

**Figure 7** illustrates a method for interaction between a user and one or more objects of a scene or environment, according to a non-restrictive embodiment. The method may for example be implemented in the device 50.

In a first operation 71, A movement of at least one hand is detected between a first position and a second position.

In a second operation 72, A control mode, e.g. a first control mode called continuous mode or a second control mode called discrete mode, may be selected according to whether a distance between the second position and a position of another part of a human body is greater than a first determined distance value and according to whether the at least one hand stays at a distance greater than a second determined distance value from the another part of a human body during a time greater than a determined time value.

For example, the first control mode is selected when the distance between the second position and the position of the another part of a human body is greater than the first determined distance value and the time is greater than the determined time value.

According to another example, the second control mode is selected when the distance between the second position and the position of the another part of a human body is greater than the first determined distance value, the time is less than the determined time value and a motion of the at least one hand is detected with an amplitude greater than a determined amplitude value.

According to a variant, the method further comprises outputting an information representative of a plurality of movements when the first control mode is selected and/or an information representative of the motion when the second control mode is selected.

According to a further variant, the first control mode is selected for two hands, said information representative of a plurality of movements is according relative position of one hand with regard to the other hand.

According to a specific embodiment, the first determined distance value is different from said second determined distance value.

According to another embodiment, the another part of a human body corresponds to a shoulder.

According to a particular embodiment, the method further comprises controlling at least a virtual object with said at least one hand according to the selected control mode.

According to a specific embodiment, the method further comprises controlling a browsing into a virtual environment and/or an Augmented-reality environment with said at least one hand according to the selected control mode.

According to a variant, the selecting of a control mode is further according to whether said at least one hand is at a height greater than a determined height value.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method comprising:
- detecting a movement of at least one hand between a first position and a second position;
- selecting a control mode according to whether a distance between said second position and a position of another part of a human body is greater than a first determined distance value and according to whether said at least one hand stays at a distance greater than a second determined distance value from said another part of a human body during a time greater than a determined time value.

2. The method according to claim 1, wherein:
- a first control mode is selected when said distance is greater than said first determined distance value and said time is greater than said determined time value;
- a second control mode is selected when said distance is greater than said first determined distance value, said time is less than said determined time value and a motion of said at least one hand is detected with an amplitude greater than a determined amplitude value.

3. The method according to claim 2, further comprising outputting an information representative of a plurality of movements when said first control mode is selected and/or an information representative of said motion when said second control mode is selected.

4. The method according to claim 3, wherein when the first control mode is selected for two hands, said information representative of a plurality of movements is according relative position of one hand with regard to the other hand.

5. The method according to any one of claims 1 to 4, wherein said first determined distance value is different from said second determined distance value.

6. The method according to any one of claims 1 to 5, wherein said another part of a human body corresponds to a shoulder.

7. The method according to any one of claims 1 to 6, further comprising controlling at least a virtual object with said at least one hand according to the selected control mode.

8. The method according to any one of claims 1 to 7, wherein said selecting of a control mode is further according to whether said at least one hand is at a height greater than a determined height value.

9. A device comprising:
- a detector configured for detecting a movement of at least one hand between a first position and a second position;
- a selector configured for selecting a control mode according to whether a distance between said second position and a position of another part of a human body is greater than a first determined distance value and according to whether said at least one hand stays at a distance greater than a second determined distance value from said another part of a human body during a time greater than a determined time value.

10. The device according to claim 9, wherein:
- a first control mode is selected when said distance is greater than said first determined distance value and said time is greater than said determined time value;
- a second control mode is selected when said distance is greater than said first determined distance value, said time is less than said determined time value and a motion of said at least one hand is detected with an amplitude greater than a determined amplitude value.

11. The device according to claim 10, further comprising a processor configured to output an information representative of a plurality of movements when said first control mode is selected and/or an information representative of said motion when said second control mode is selected.

12. The device according to claim 11, wherein when the first control mode is selected for two hands, said information representative of a plurality of movements is according relative position of one hand with regard to the other hand.

13. The device according to any one of claims 9 to 12, wherein said first determined distance value is different from said second determined distance value.

14. The device according to any one of claims 9 to 13, further comprising a controller configured for controlling at least a virtual object with said at least one hand according to the selected control mode.

15. The device according to any one of claims 9 to 14, wherein the selecting of a control mode is further according to whether said at least one hand is at a height greater than a determined height value.
